# FASCICULE DE BREVET EUROPEEN

(11) **EP 4 016 353 B1**
(45) Date de publication et mention de la délivrance du brevet: **10.05.2023**
(21) Numéro de dépôt: 21215295.3
(22) Date de dépôt: 16.12.2021
(51) Int. Cl.: G06F 21/62

(54) **PROCEDE DE CHIFFREMENT ET DE STOCKAGE DE FICHIERS INFORMATIQUES ET DISPOSITIF DE CHIFFREMENT ET DE STOCKAGE ASSOCIE**
VERFAHREN ZUR VERSCHLÜSSELUNG UND SPEICHERUNG VON COMPUTERDATEIEN UND ENTSPRECHENDE VERSCHLÜSSELUNGS- UND SPEICHERVORRICHTUNG
METHOD FOR ENCRYPTING AND STORING COMPUTER FILES AND ASSOCIATED ENCRYPTION AND STORAGE DEVICE

(30) Priorité: 18.12.2020 FR 2013639
(43) Date de publication de la demande: 22.06.2022
(73) Titulaire: SAGEMCOM BROADBAND SAS, 92500 Rueil-Malmaison (FR)
(72) Inventeur: LE ROUX, Sylvain, 92500 RUEIL MALMAISON (FR); DIONISI, Florent, 92500 RUEIL MALMAISON (FR)
(74) Mandataire: Cabinet Le Guen Maillet

(56) Documents cités:
- EP-A1- 2 779 523
- WO-A1-01/52473
- WO-A1-2007/091002
- US-A1- 2018 198 612

## Description

### DOMAINE TECHNIQUE

La présente invention se rapporte à la gestion, dans un réseau local, de clés de chiffrement utiles au chiffrement de fichiers informatiques, à des fins de stockage sécurisé de ces fichiers. L'invention concerne plus particulièrement une gestion centralisée de clés de chiffrement pour le chiffrement et le stockage sous forme chiffrée, de fichiers informatiques, notamment lorsque plusieurs utilisateurs d'un même réseau local partagent des fichiers et y accèdent à partir d'une pluralité de dispositifs.

### ETAT DE LA TECHNIQUE ANTERIEURE

De multiples outils existent qui permettent de générer et enregistrer des clés ou des mots de passe de façon centralisée, tels que, par exemple l'outil informatique nommé *KeePass2.* Ces outils constituent des bases de données de mots de passe, qui conservent les mots de passe sous une forme chiffrée, ce qui est particulièrement utile dans la mesure où de très nombreuses applications requièrent une protection par mot de passe et qu'il convient, pour des raisons de sécurité évidentes, d'utiliser des mots de passe distincts pour chaque application. Ces outils nécessitent la connaissance d'un mot de passe principal, parfois appelé « mot de passe maître » et stockent une base de données de mots de passe dans l'équipement (ordinateur, smartphone, tablette, par exemple) de l'utilisateur.

Un partage de ces informations nécessite donc un partage d'un fichier constituant la base de données de mots de passe ainsi qu'un partage du mot de passe principal. Cela ne permet pas un partage simple, par exemple dans le cas d'une utilisation d'applications multiples, entre différents utilisateurs de différents équipements informatiques reliés à un réseau local dans un foyer. De plus, lorsque ces informations ont été communiquées à une personne, il n'est pas possible de révoquer des droits spécifiquement pour cette personne, et c'est la révocation de l'ensemble des droits qui est alors nécessaire, avec un impact sur tous les utilisateurs de mots de passe contenus dans la base de données de mots de passe.

Par ailleurs, concernant le chiffrement de fichiers informatiques, des outils existent et qui permettent de chiffrer un fichier de sorte qu'il soit ensuite déchiffrable par différents utilisateurs. Si ces outils visent principalement le chiffrement de fichiers, ils ne mettent pas en oeuvre une gestion centralisée des clés de chiffrement. Il est décrit, dans chacun des documents WO 2007/091002 A1 et WO 01/52473 A1, une solution décentralisée de chiffrement et de stockage de fichiers.

La situation peut être améliorée.

### EXPOSE DE L'INVENTION

L'invention a pour but de proposer une solution centralisée de chiffrement et de stockage de fichiers et permettant de partager simplement l'accès à des documents chiffrés entre plusieurs utilisateurs.

A cet effet, il est proposé un procédé de chiffrement et de stockage d'un fichier informatique, le procédé étant exécuté par un dispositif de sécurisation des accès dit « magasin de clés » audit fichier informatique, le procédé comprenant :
- établir une liste de *n* paires de clés, chaque paire de clés comprenant respectivement une clé dite privée et une clé dite publique, dans laquelle chacune des paires de clés est associée à un identifiant unique d'un i*^{ème}* client autorisé à accéder audit fichier informatique,
- recevoir, ledit fichier informatique et le chiffrer en une version chiffrée du fichier informatique, grâce à une clé de chiffrement du fichier informatique,
- chiffrer la clé de chiffrement en autant de versions chiffrées que de clés publiques des paires de clés, chacune des versions chiffrées de la clé de chiffrement étant chiffrée avec l'une des clés publiques des paires de clés des clients autorisés à accéder au fichier F,
- enregistrer une version chiffrée du fichier informatique, chiffrée au moyen de ladite clé de chiffrement du fichier informatique, dans un espace de stockage de fichiers accessible depuis le magasin de clés, la version chiffrée du fichier informatique étant associée avec les versions chiffrées de la clé de chiffrement,
- associer le fichier, dans une liste de fichiers chiffrés et stockés sous contrôle du magasin de clés, à un ou plusieurs identifiants uniques de paires de clés, ainsi qu'à un pointeur vers une version chiffrée du fichier informatique enregistrée dans l'espace de stockage de fichiers.

Ainsi, il est avantageusement possible de révoquer des droits d'accès octroyés à l'un des utilisateurs, sans impact pour les autres.

Un second avantage réside dans le fait qu'il est possible d'assurer la confidentialité d'informations contenues dans des fichiers informatiques lorsque ceux-ci sont stockés dans un ou plusieurs dispositifs de stockage qui n'offrent pas nativement cette possibilité.

Un troisième avantage est qu'un chiffrement centralisé est opéré en fonction du ou des utilisateurs autorisés en accès à un fichier stocké dans l'espace de stockage des fichiers. Ainsi grâce au procédé décrit, l'accès à un fichier et sont déchiffrement sont liés à la validité de la clé privée du client demandeur qui peut être le client à l'origine du stockage du fichier ou un client autre autorisé à accéder à ce fichier. Un client étant défini comme un utilisateur ou encore comme une combinaison d'un utilisateur opérant sur un dispositif déterminé.

Un autre avantage est qu'en cas de révocation d'une clé, un fichier chiffré associé à cette clé voit son chiffrement mis à jour avec le reste des clés encore valides associées à des clients ayant un droit d'accès à ce fichier.

Le procédé selon l'invention peut également comporter les caractéristiques suivantes, considérées seules ou en combinaison :
- Le procédé est défini tel que :
   - établir la liste de *n* paires de clés comprend un ajout d'une n*^{ième}* paire de clés associée à un identifiant unique d'un n*^{ième}* client autorisé à accéder au fichier informatique dans la liste de paires de clés, et/ou dans lequel
   - un identifiant d'une i*^{ième}* paire de clés est inséré dans la liste de fichiers chiffrés et stockés par ledit magasin de clés, en association avec ledit fichier informatique aux fins d'octroyer à un i*^{ième}* client nouvellement autorisé à accéder au fichier informatique un droit d'accès au fichier informatique.

Ainsi, des droits d'accès à un fichier peuvent être octroyés à un client nouvellement autorisé et à qui il n'avait pas été attribué une paire de clés, ou encore à un client à qui une paire de clés est déjà attribuée mais qui ne possédait pas encore de droits d'accès à ce fichier.
- Le procédé est défini tel que :
   - établir la liste de *n* paires de clés comprend un retrait d'une i*^{ième}* paire de clés associée à un identifiant unique d'un i*^{ième}* client autorisé à accéder au fichier informatique dans la liste de paires de clés, et/ou dans lequel
   - un identifiant d'une i*^{ième}* paire de clés, est retiré de la liste de fichiers chiffrés et stockés par ledit magasin de clés, en association avec ledit fichier informatique aux fins d'interdire au i*^{ième}* client, précédemment autorisé, un accès au fichier informatique.

Ainsi des droits d'accès à un fichier peuvent être retirés à un client qui n'est plus autorisé en accès à ce fichier et donc la paire de clés demeure valide et/ou dont la paire de clés est révoquée.
- L'identifiant unique d'un client comporte un nom d'utilisateur et/ou un mot de passe ou un dérivé de ces éléments. Il est ainsi possible d'accroître la sécurité des accès au magasin de clés en permettant une authentification du client lors de la connexion d'un client au magasin de clés, sous le contrôle de ce dernier.
- Un ou plusieurs identifiants uniques d'un client comportent un identifiant unique d'un dispositif utilisé par un utilisateur du magasin de clés, notamment du type d'une adresse MAC d'un dispositif électronique. Il est ainsi possible d'accroître la sécurité des accès au magasin de clés en permettant une authentification du client ainsi que du dispositif utilisé lors de la connexion d'un client au magasin de clés, sous le contrôle de ce dernier.
- Le procédé comprend une étape d'authentification d'un client autorisé à accéder au magasin de clés vérifiant que le client est connecté au magasin de clés par l'intermédiaire d'un réseau local de type LAN, par le biais d'une liaison filaire ou d'une liaison sans fil chiffrée. Il est ainsi possible de sécuriser les accès aux fichiers chiffrés et enregistrés en les limitant à des clients connectés présents dans un environnement qui comprend le réseau local de type LAN, tel qu'un foyer ou une entreprise, par exemple.
- Le magasin de clés mis en oeuvre par le procédé est embarqué dans un équipement de type passerelle réseau domestique ou un équipement de type serveur, tel qu'un serveur *« cloud* ». Ainsi, le nombre d'équipements utiles à l'exécution du procédé de chiffrement et de stockage de fichiers est limité et la gestion centralisée du chiffrement et du stockage de fichiers est implémentée par un équipement ayant déjà vocation à apparaître central dans un réseau local ou vu d'un réseau local.

L'invention a également pour objet un dispositif de sécurisation d'accès, dit « magasin de clés », à au moins un fichier informatique, le magasin de clés comprenant des circuiteries électroniques comprenant :
- un module d'établissement d'une liste de *n* paires de clés, chaque première paire de clés comprenant respectivement une clé dite privée et une clé dite publique, dans laquelle chacune des paires de clés est associée à un identifiant unique d'un i*^{ème}* client autorisé à accéder audit fichier informatique,
   une interface de communication configurée pour la réception du fichier informatique et un module de chiffrement configuré pour le chiffrement du fichier informatique en une version chiffrée du fichier informatique, grâce à une clé de chiffrement du fichier informatique, et configuré pour le chiffrement de la clé de chiffrement en autant de versions chiffrées que de clés publiques, chacune des versions chiffrées de la clé de chiffrement étant chiffrée avec l'une des clés publiques des paires de clés des clients autorisés à accéder au fichier F,
- un module d'enregistrement d'une version chiffrée du fichier informatique au moyen de la clé de chiffrement du fichier informatique, dans un espace de stockage de fichiers accessible depuis le magasin de clés, la version chiffrée du fichier informatique étant associée avec les versions chiffrées de la clé de chiffrement,
- un module d'association du fichier, dans une liste de fichiers chiffrés et stockés sous contrôle dudit magasin de clés, à un ou plusieurs identifiants uniques de paires de clés, ainsi qu'à un pointeur vers une version chiffrée du fichier informatique enregistrée dans l'espace de stockage de fichiers.

Enfin, l'invention a pour objet un produit programme d'ordinateur comprenant des instructions de codes de programme pour exécuter les étapes du procédé précité, lorsque le programme est exécuté par un processeur, ainsi qu'un dispositif support de stockage d'informations comprenant un tel produit programme d'ordinateur.

### BREVE DESCRIPTION DES DESSINS

Les caractéristiques de l'invention mentionnées ci-dessus, ainsi que d'autres, apparaîtront plus clairement à la lecture de la description suivante d'au moins un exemple de réalisation, ladite description étant faite en relation avec les dessins joints, parmi lesquels :
[Fig. 1] illustre schématiquement un réseau informatique de type réseau local dans lequel est mis en oeuvre un procédé de chiffrement et de stockage de fichiers informatiques selon un mode de réalisation de l'invention ;
[Fig. 2] illustre une notion de « client » du service mis en oeuvre par le procédé selon un mode de réalisation, dans le réseau informatique déjà représenté sur la Fig.1 ;
[Fig. 3] est une représentation d'une liste de paires de clés de chiffrement utilisées par le procédé selon un mode de réalisation ;
[Fig. 4] est une représentation d'une liste de fichiers informatiques dont le chiffrement et le stockage sont réalisés par un procédé selon un mode de réalisation ;
[Fig. 5] est un ordinogramme représentant des étapes d'un procédé de chiffrement et de stockage de fichiers informatiques, selon un mode de réalisation de l'invention ;
[Fig. 6] est un diagramme de principe représentant un dispositif de sécurisation d'accès dit « magasin de clés » configuré pour exécuter un procédé de chiffrement et de stockage de fichiers informatiques, tel qu'illustré sur la Fig.5, selon un mode de réalisation.

### EXPOSE DETAILLE DE MODES DE REALISATION

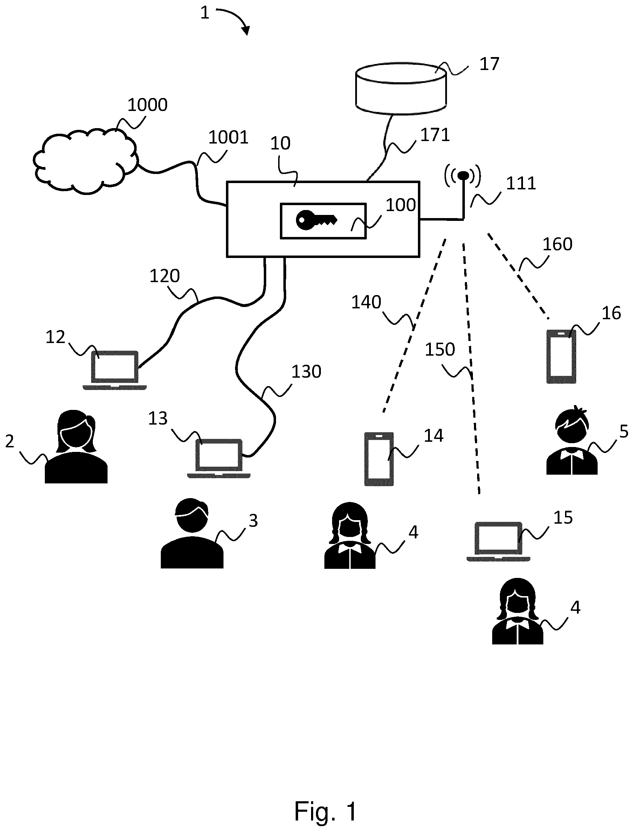

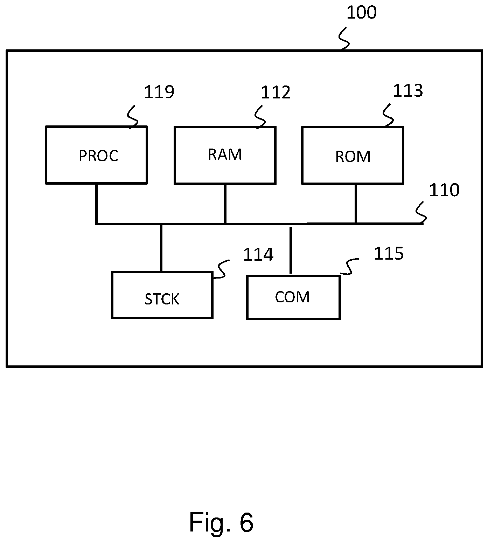

La Fig. 1 illustre schématiquement un réseau local 1 de type réseau LAN (de l'anglais *« Local Area Network* »). Le réseau local 1 est un réseau domestique qui comprend un équipement passerelle réseau 10, typiquement de type passerelle réseau résidentielle. La passerelle réseau 10 est configurée pour la connexion du réseau local 1 à un réseau étendu 1000, par l'intermédiaire d'un lien de connexion 1001. Le réseau étendu 1000 est un réseau de type WAN (de l'anglais « *Wide Area Network* »). Selon un mode de réalisation de l'invention, le réseau étendu 1000 est le réseau *internet.* Le lien de connexion 1001 peut être implémenté sous la forme d'une ligne d'abonné au téléphone, et la connexion utilise par exemple une technologie ADSL (sigle anglais pour « *Asymmetric Digital Subscriber Line* » et qui signifie « ligne d'abonné numérique et asymétrique »), une connexion de type fibre optique ou encore une liaison sans-fil de type accès sans-fil fixe ou « *fixed wireless access* » reposant sur des technologies d'accès 4G et/ou 5G par exemple. Ces exemples n'étant pas limitatifs. Des dispositifs électroniques 12, 13, 14, 15 et 16, de différents types, sont configurés pour être connectés au réseau local 1 par l'intermédiaire de la passerelle réseau 10. Ainsi, les dispositifs électroniques 12 et 13, chacun de type ordinateur portable ou encore *laptop,* sont respectivement connectés à la passerelle réseau 10 par l'intermédiaire de liaisons filaires 120 et 130. Les liaisons filaires 120 et 130 sont par exemple des liaisons de type *Ethernet.* Les dispositifs électroniques 14 et 16 sont des téléphones intelligents communément appelés *smartphones,* respectivement connectés à la passerelle réseau 10 par l'intermédiaire de connexions sans fil 140 et 160 établies via un système antennaire 111 de la passerelle réseau 10. Le système antennaire 111 est connecté à un module de communication 115 interne à la passerelle réseau 10, configurée pour des connexions filaires et des connexions sans fil (non représentée sur la figure Fig.1 mais visible sur la Fig.6). Un ordinateur portable ou *laptop* 15 est également connecté à la passerelle réseau 10, et au réseau local 1 par l'intermédiaire d'une liaison sans fil 150, utilisant le système antennaire 111. Un dispositif de stockage de type NAS (de l'acronyme anglais « *Network Attached. Storage* », et qui signifie « dispositif de stockage attaché à un réseau ») 17 est également connecté à la passerelle réseau 10, par l'intermédiaire d'un lien 171. Le lien 171 est par exemple un lien filaire de type *Ethernet.* Dans les exemples à venir de la présente description, le réseau local 1, implémenté dans un foyer, est mis à la disposition de quatre utilisateurs 2, 3, 4 et 5. L'utilisateur 2 est défini comme étant l'utilisateur principal du laptop 12. De façon similaire, l'utilisateur 3 est l'utilisateur principal du laptop 13. L'utilisateur 4 est l'utilisateur principal du smartphone 14 ainsi que du laptop 15, et l'utilisateur 5 est l'utilisateur principal du smartphone 16 mais utilise toutefois régulièrement chacun des dispositifs électroniques décrits, dans la mesure où il administre le réseau local 1. On entend ici par « utilisateur principal » d'un dispositif, un utilisateur qui opère la plupart des usages et accès en lien avec le réseau local 1 au moyen de ce dispositif, bien qu'il ait en outre accès aux autres dispositifs décrits, mais qu'il en fait un usage plus occasionnel. Selon un mode de réalisation de l'invention, la passerelle réseau 10 comprend un dispositif de sécurisation d'accès 100, dit « magasin de clés », à un espace de stockage de fichiers informatiques STM du dispositif de stockage 17. Cet espace de stockage STM du dispositif de stockage 17 est prévu et configuré pour un stockage sécurisé de fichiers informatiques des différents utilisateurs 2, 3, 4 et 5. Les fichiers informatiques concernés peuvent être de toute nature, telle que des documents sous forme de texte, des photos, des enregistrements sonores ou des vidéos, des classeurs de tableur, ou encore des illustrations ou des dessins, par exemple. Les termes « stockage sécurisé » sont à interpréter ici comme le stockage sous forme chiffrée des fichiers que l'utilisateur veut pouvoir stocker, accompagné d'une authentification de tout utilisateur souhaitant accéder à un ou plusieurs de ces fichiers. Avantageusement et selon l'invention, le magasin de clés 100 implémente une gestion centralisée de clés de chiffrement asymétrique pour chacun des utilisateurs intervenant sur l'un ou l'autre des dispositifs électroniques 12, 13, 14, 15 ou 16. La gestion centralisée des clés de chiffrement comprend aussi bien la génération de paires de clés utiles au chiffrement et au déchiffrement de fichiers, au chiffrement et au déchiffrement de clés de chiffrement de fichiers, que le stockage de ces clés dans un espace nommé « coffre », ainsi que la révocation de clés selon des critères prédéterminés. Le magasin de clés 100 opère en outre des opérations de chiffrement et de déchiffrement de fichiers informatiques ou de clés de chiffrement, ainsi que des opérations de stockage de ces fichiers dans l'espace de stockage de fichiers STM. Enfin, le magasin de clés 100 gère une liste FL de fichiers chiffrés et stockés sous son contrôle. Selon un mode de réalisation, le magasin de clés 100 peut également mettre à la disposition d'un utilisateur, par transfert, un fichier sous sa forme chiffrée, de sorte que l'utilisateur puisse le déchiffrer ultérieurement, à l'aide d'une clé privée. Selon un mode de réalisation de l'invention, une paire de clés de chiffrement dites respectivement publique et privée permettant un stockage sécurisé de fichiers peut être générée pour chacun des utilisateurs du magasin de clés 100, identifié en combinaison avec un dispositif électronique, et qui souhaite stocker un ou plusieurs fichiers chiffrés dans l'espace de stockage de fichiers informatiques STM. Ainsi, un client déterminé correspond soit à un utilisateur tel que l'un des utilisateurs 2, 3, 4, 5, soit à un utilisateur considéré en combinaison avec un dispositif tel que l'un des dispositifs électroniques 12, 13, 14, 15 et 16. Dans la suite de la description, un « client » du magasin de clés 100 est défini comme un utilisateur parmi les utilisateurs 2, 3, 4 et 5, combiné à l'un des dispositifs électroniques parmi les dispositifs électroniques 12, 13, 14, 15 et 16, ou encore comme l'un des utilisateurs 2, 3, 4 et 5, considéré indépendamment du dispositif électronique qu'il utilise.

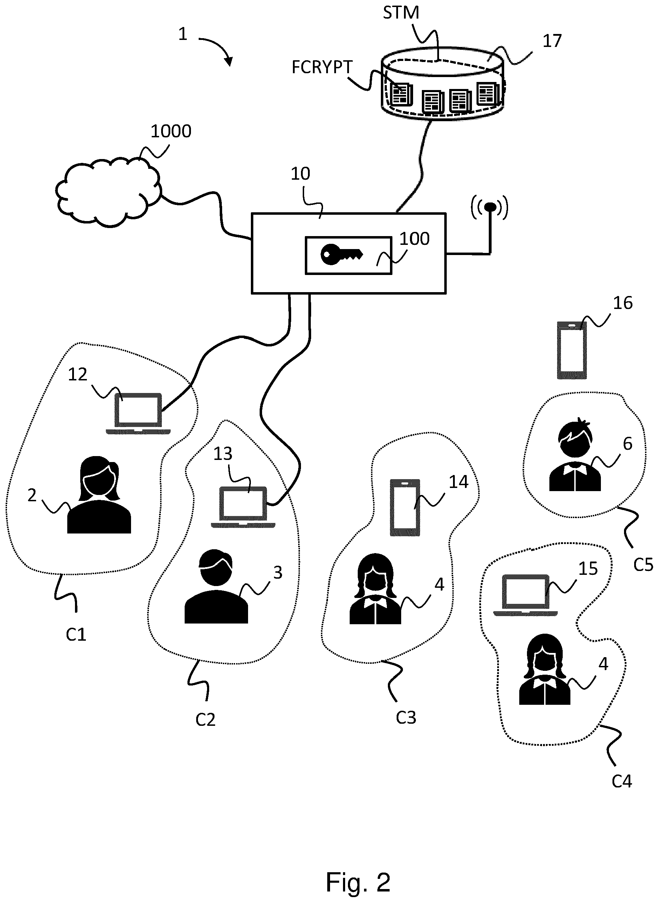

La Fig. 2 illustre la notion de « clients » du magasin de clés 100 et représente un premier client C1 comme étant l'association (ou combinaison) de l'utilisateur 2 opérant via le laptop 12. De la même façon un client C2 est défini comme étant l'association de l'utilisateur 3 opérant via le laptop 13, un client C4 est défini comme étant l'utilisateur 4 opérant via le smartphone 14, un client C5 est défini comme étant ce même utilisateur 4 opérant via le laptop 15, et un client C5 est défini comme étant l'utilisateur 5, quel que soit le dispositif qu'il utilise pour opérer des accès en lien avec le magasin de clés 100. La Fig.2 illustre en outre une pluralité de fichiers stockés dans l'espace de stockage STM du dispositif de stockage 17 de type NAS, connecté à la passerelle réseau 10, dont l'un, FCRYPT est une version chiffrée d'un fichier natif F. Avantageusement, chaque client Ci ainsi défini est identifié et représenté par un identifiant client unique CIDi. Selon un mode de réalisation, l'identifiant unique CIDi d'un client comprend l'adresse MAC de l'équipement qu'il utilise ainsi qu'un nom d'utilisateur du client, par exemple sous forme d'une concaténation de ces éléments. Selon un mode de réalisation de l'invention, les accès aux fichiers stockés dans l'espace de stockage du dispositif de stockage 17, réalisés par l'intermédiaire du magasin de clés 100, sont opérés par les utilisateurs au moyen d'une application dite « application client ». Ainsi une application client est une interface permettant à un client (et donc à un utilisateur) d'accéder à l'offre de service de chiffrement et de stockage mise en oeuvre par le magasin de clés 100 associé à l'espace de stockage STM dédié. Selon un mode de réalisation, l'application client est implémentée sous la forme d'une page web accessible depuis un navigateur internet et cette page web est instanciée par un serveur web embarqué dans la passerelle réseau 10, ou encore directement dans le magasin de clés 100. Selon une variante, l'application client peut prendre la forme d'une application dédiée à une utilisation sur un smartphone ou peut se présenter sous la forme d'un programme exécuté sur un ordinateur fixe ou laptop. Quelle que soit la forme que revêt l'application client, celle-ci doit avoir accès à un espace de stockage dédié à l'enregistrement de clés de déchiffrement qui lui sont transmises par le magasin de clés 100 et qui sont adaptées au déchiffrement d'un ou plusieurs fichiers, le cas échéant. Cet espace de stockage est nommé « coffre » du magasin de clés 100.

Selon un mode de réalisation de l'invention, chaque client Ci utilisant le magasin de clés 100 pour opérer un stockage d'un fichier sous forme chiffrée ou encore un accès en lecture à un fichier, sous forme chiffrée (sans déchiffrement par le magasin de clés 100) ou déchiffrée (par l'intermédiaire du magasin de clés 100) doit être authentifié par le magasin de clés 100. A cet effet, un client qui utilise l'application client s'identifie par la saisie d'un nom utilisateur et d'un mot de passe, par exemple. Selon un mode de réalisation, le magasin de clés 100 comprend une liste de mots de passe autorisés, couplés à des identifiants d'utilisateur. Selon une variante, les mots de passe sont stockés par le magasin de clés 100 sous forme chiffrée, c'est-à-dire que le magasin de clés 100 comprend une liste d'identifiants d'utilisateur étant chacun associé à un *hash* de son mot de passe, ce qui permet de ne pas stocker les mots de passe en clair, et accroît la sécurité des éléments et du procédé d'authentification des utilisateurs. Selon une autre variante du mode de réalisation, le chiffrement des mots de passe des utilisateurs est réalisé en ajoutant un sel au mot de passe initial, de sorte que le chiffrement soit appliqué à une concaténation du mot de passe et du sel, le sel étant une suite de nombres ou éléments alphanumériques aléatoires. Avantageusement, cela augmente encore le degré de sécurité du procédé d'authentification et des éléments utilisés pour opérer ce procédé.

Selon un mode de réalisation de l'invention, la génération des clés et les opérations de chiffrement et de déchiffrement réalisées par le procédé de chiffrement et de stockage décrit repose sur les propriétés d'un algorithme de chiffrement asymétrique tel que, par exemple l'algorithme RSA (sigle issu du nom de ses inventeurs). L'algorithme utilise pour chacun des clients autorisés à stocker un fichier sous forme chiffrée ou à accéder à un fichier sous forme chiffrée, une paire de clés dites respectivement publique et privée. Ces deux clés sont liées entre elles par une relation mathématique, selon l'algorithme RSA, de sorte qu'une clé privée ne doit être connue que de son destinataire (soit l'un des clients du magasin de clés 100), la clé publique étant quant à elle connue du magasin de clés 100. Selon un mode de réalisation, le magasin de clés 100 comprend un environnement sécurisé permettant de conserver les clés publiques en toute sécurité. Un tel environnement sécurisé est par exemple un environnement de type TEE (du sigle anglais « *Trusted Execution Environment* ») dédié au stockage sécurisé d'informations et à la réalisation d'opérations cryptographiques, encore communément appelé *TrustZone.* Ce type d'environnement sécurisé est par exemple obtenu par l'implémentation d'outils tels que définis selon l'OPTEE (projet de type *open source* qui vise à l'implémentation de solution complète de type TEE).

Selon le principe de chiffrement asymétrique utilisé, et considérant une paire de clés e_{c} et d_{d} respectivement publique et privée, si *Crypt* est une fonction de chiffrement prédéterminée et *Decrypt* est une fonction de déchiffrement prédéterminée, alors, pour tout message m d'un fichier informatique de données à stocker, m = *Crypt (Decrypt* (m, d_{d}), e_{c} ). Un schéma de signature peut être construit à partir de ce système de cryptographie. Selon un mode de réalisation de l'invention, le magasin de clés génère une paire de clés publique et privée pour tout client identifié et authentifié désireux de stocker un fichier ou plusieurs fichiers informatiques par le biais du service de chiffrement et de stockage implémenté par le magasin de clés 100 combiné à un espace de stockage dédié.

Ainsi, si un client (un utilisateur, ou encore un utilisateur considéré en combinaison avec un dispositif électronique qu'il utilise) se connecte et est authentifié sans pour autant détenir une paire de clés dites respectivement publique et privée, alors le magasin de clés 100 génère une paire de clés et l'attribue à ce client. Selon un mode de réalisation, un ensemble de clés peut être généré de manière anticipée par le magasin de clés 100, de sorte qu'il n'y ait alors à réaliser qu'une attribution, lorsque nécessaire, ce qui permet un gain de temps.

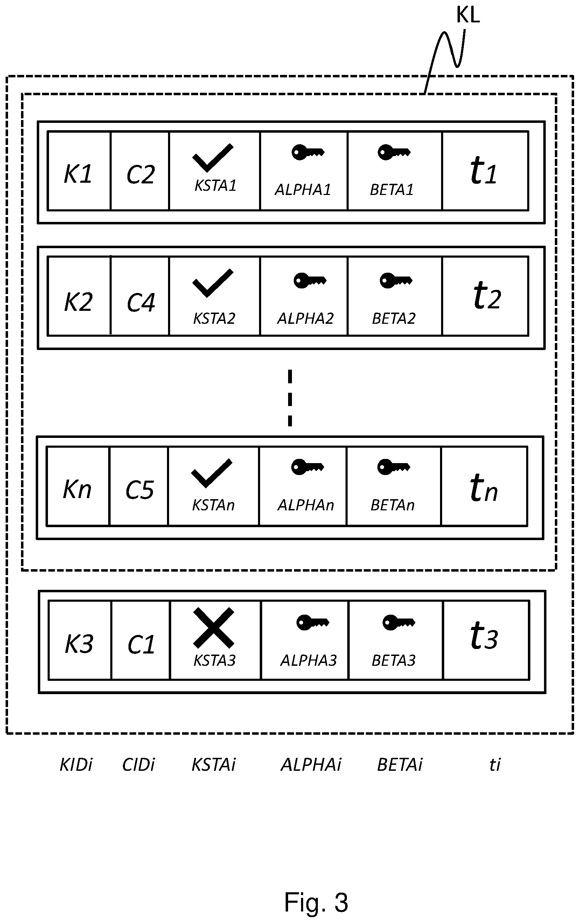

La Fig. 3 représente un liste KL de paires de clés dites respectivement publique et privée permettant d'octroyer des droits d'accès à un ou plusieurs clients du magasin de clés, connectés à celui-ci et opérant par l'intermédiaire d'une application client disponible par exemple sur un smartphone, un laptop, un ordinateur fixe ou encore tout autre dispositif électronique configuré pour ce faire. La liste KL des paires de clés est stockée dans le coffre du magasin de clés 100. Il est à noter que la liste KL comprend les paires de clés attribuées à des clients autorisés à réaliser des accès à des fichiers par l'entremise du magasin de clés 100. D'autres paires de clés peuvent être présentes dans le coffre du magasin de clés 100, telles que des paires de clés non encore attribuées ou des paires de clés révoquées. Ces dernières ne sont toutefois pas comprises dans la liste KL qui contient, par définition, les paires de clés de clients autorisés à accéder à un fichier informatique via le magasin de clés 100.

Selon le mode de réalisation préféré, chacune des paires de clés est composée d'une clé privée ALPHAi et d'une clé publique BETAi respectivement liées entre elles par un algorithme de chiffrement tel que précédemment décrit. Chacune de ces paires de clés est associée à un identifiant unique CIDi d'un i*^{ème}* client Ci autorisé à accéder à au moins un fichier informatique F stocké ou qu'il s'apprête à stocker via le magasin de clés 100. La Fig.3 représente *n* paires de clés et illustre une première paire de clés ALPHA1 et BETA1 associée au client C2, c'est-à-dire à l'utilisateur 3 opérant via le laptop 13, selon l'exemple décrit sur la Fig.2. La Fig.3 illustre aussi une deuxième paire de clés ALPHA2 et BETA2 associée au client C4, soit à l'utilisateur 4 opérant via le laptop 15, ainsi qu'une troisième paire de clés ALPHA 3 et BETA 3 associée au client C1 et une n^{ième} paire de clés ALPHAn et BETAn associée au client C5, soit à l'utilisateur 5 indépendamment du dispositif électronique qu'il utilise, comme expliqué précédemment. Chacune des n paires de clés courantes mémorisée dans le coffre du magasin de clés 100 est associée en outre à un identifiant unique de clé KIDi. Ainsi la première paire de clés, associée au client C2, est associée à un identifiant unique KID1 d'une paire de clés « K1 ». De façon similaire, la deuxième paire de clés, associée au client C4, soit à l'utilisateur 4 utilisant le laptop 15, est associée à un identifiant unique KID2 « K2 », et ainsi de suite. Avantageusement chaque paire de clés, ou en d'autres termes chacun des enregistrements du coffre comprenant une paire de clés ALPHAi et BETAi, contient un indicateur de *status* KSTAi défini pour indiquer si la paire de clés ALPHAi et BETAi est valide ou révoquée. Ainsi, toutes les paires de clés présentant un indicateur de *status* KSTAi indiquant que la clé est valide (non révoquée) et étant attribuées à un client Ci composent la liste KL. D'autres paires de clés, générées mais non encore attribuées, ou encore révoquées peuvent être présentes dans le coffre du magasin de clés 100, mais elles n'appartiennent alors pas, par définition, à la liste KL. Sur la Fig.3 une paire de clés valide comprend un indicateur de type pictogramme « vérifié » pour signifier que la clé est valide et une paire de clés révoquées comprend un indicateur de type pictogramme « croix qui barre » pour signifier que la clé en question a été révoquée. Bien évidemment, l'indicateur *status* KSTAi d'une paire de clés ALPHAi et BETAi peut être codé autrement (par exemple 1 pour valide et 0 pour révoquée). Ainsi, et selon l'exemple illustré sur la Fig.3, les paires de clés K1, K2 et Kn sont valides et la paire de clés K3 est révoquée, c'est-à-dire considérée comme invalide après avoir été utilisée ou, à tout le moins, après avoir été générée. Avantageusement, chacun des enregistrements du coffre du magasin de clés 100 comprend également une information temporelle ti qui code l'instant de la dernière utilisation des services proposés par le magasin de clés 100 par le client Ci concerné, en d'autres termes, la dernière connexion de ce client Ci au magasin de clés 100 aux fins de stocker une version chiffrée FCRYPT d'un fichier informatique F ou encore aux fins d'accéder à ce fichier F en lecture ou pour procéder à son effacement. Ainsi l'information t1 comprend par exemple, la date et l'heure de la dernière connexion du client C2 au magasin de clés 100 en vue d'utiliser les fonctions de chiffrement et de stockage dans l'espace de stockage. Avantageusement, il est ainsi possible pour le magasin de clés 100 de révoquer automatiquement une paire de clés identifiée Ki dès lors que cette dernière n'a pas été utilisée dans un intervalle de temps écoulé depuis l'instant ti de sa dernière utilisation ou encore par exemple dès qu'un temps prédéterminé s'est écoulé depuis la génération de cette paire de clés par le magasin de clés 100. Bien évidemment, les éléments temporels précités ne sont pas la seule cause de révocation d'une paire de clés identifiée Ki et le fait pour un utilisateur de perdre le contrôle d'un dispositif électronique dont il se sert (perte, vol, dégradation, panne) constitue, par exemple, une cause de révocation possible. Plus généralement, n'importe quelle politique de gestion peut être utilisée pour définir des règles visant à révoquer une paire de clés ALPHAi et BET Ai en fonction de critères prédéterminés, par exemple nativement ou encore selon des paramètres établis. Selon un mode de réalisation de l'invention, la révocation d'une paire de clés peut être opérée par un utilisateur possédant des privilèges pour ce faire, par exemple, un utilisateur identifié comme étant un administrateur du magasin de clés 100 et qui possède des droits d'écriture sur l'indicateur de *status* KSTAi d'une paire de clés identifiée Ki. Selon le mode de réalisation préféré, le magasin de clés 100 gère en outre une liste FL de fichiers informatiques Fi pour laquelle chacun des fichiers informatiques Fi est stocké sous forme chiffrée dans l'espace de stockage STM sous son contrôle, ou encore va l'être dans la mesure où un client Ci vient de se connecter en vue du stockage d'un nouveau fichier informatique.

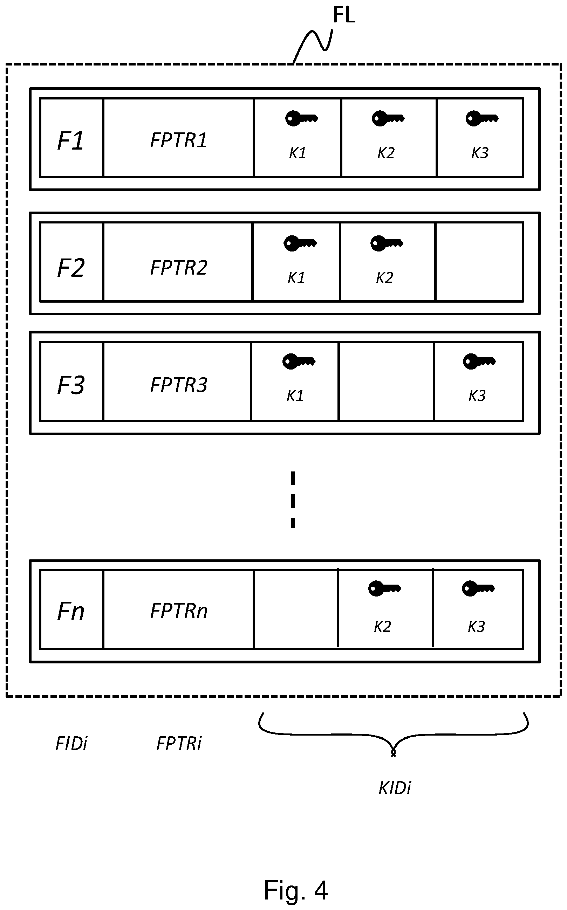

La Fig. 4 représente une liste FL de fichiers informatiques Fi gérés par le magasin de clés 100. Chacun des enregistrements correspondant respectivement aux fichiers informatiques Fi est associé à un identifiant de fichier informatique et à un pointeur d'accès FPTRi vers une version chiffrée FCRYPTi du fichier informatique Fi stocké dans l'espace de stockage géré par le magasin de clés 100, ou encore en passe d'être stocké sous contrôle de celui-ci. Selon un mode de réalisation de l'invention, un pointeur FPTRi est implémenté sous forme d'une adresse URL (du sigle anglais « Uniform Resource Locator », et qui signifie « référence uniforme de localisation). Selon un mode de réalisation, un pointeur FPTRi est utilisé par le magasin de clés 100 mettant en oeuvre des transferts de versions chiffrées des fichiers Fi dont il gère le chiffrement et le stockage, en utilisant le protocole de transfert SCP (du sigle anglais « Secure Copy Protocol », et qui signifie « protocole de copie sécurisée »).

Bien évidemment, l'usage de ce protocole n'est pas limitatif et tout autre moyen de transfert sécurisé peut être implémenté entre le magasin de clés 100 et l'espace de stockage STM dont il assure la gestion et la sécurisation.

Chacun des enregistrements correspondant respectivement aux fichiers informatiques Fi chiffrés et dont une version chiffrée FCRYPTi et stockée sous contrôle du magasin de clés 100 comprend en outre une liste des identifiants uniques de paires de clés associées aux clients autorisés à accéder à la version chiffrée FCRYPTi du fichier Fi auquel il se réfère. Ainsi, selon l'exemple décrit sur la Fig.4, le fichier informatique identifié F1 peut être lu ou modifié par les clients respectivement associés aux paires de clés « K1 », « K2 » et « K3 » ; le fichier informatique identifié F2 peut être lu ou modifié par les clients respectivement associés aux paires de clés « K1 » et « K2 » ; le fichier informatique identifié F3 peut être lu ou modifié par les clients respectivement associés aux paires de clés « K1 » et « K3 » ; et le fichier informatique Fn peut être lu ou modifié par les clients respectivement associés aux paires de clés « K2 » et « K3 ». Une modification d'un fichier Fi comprend ici son actualisation ou son effacement. Selon un mode de réalisation, un client possédant des droits pour lire un fichier Fi ou accéder à une version chiffrée FCRYPTi d'un fichier Fi possède également des droits pour effacer le fichier informatique Fi ou remplacer le fichier informatique Fi chiffré par une nouvelle version. Selon une variante, seul un client disposant de privilèges suffisants peut modifier et/ou effacer un fichier informatique Fi (ou plus exactement la version chiffrée de ce fichier informatique Fi), par exemple un utilisateur identifié comme étant un administrateur du magasin de clés 100.

Astucieusement, un fichier informatique F qui doit être stocké par un client dans l'espace de stockage géré par le magasin de clés 100 est chiffré en utilisant une clé de chiffrement symétrique SK, laquelle clé SK est ensuite chiffrée en autant de versions chiffrées qu'il n'existe de clients autorisés à accéder au fichier informatique F, en utilisant respectivement, pour chiffrer chacune des versions chiffrées de la clé SK, la clé publique BETAi de chacun des clients autorisés, disponible dans le coffre du magasin de clés 100. Les versions chiffrées de la clé de chiffrement SK sont ensuite associées à la version chiffrée du fichier F, en étant par exemple enregistrées dans un en-tête de la version chiffrée FCRYPT du fichier informatique F, en association avec l'identifiant unique CIDi du client qui lui est associé et qui peut retrouver la clé de chiffrement SK en déchiffrant sa version chiffrée à l'aide de sa clé privée ALPHAi. Dès lors qu'un client peut déchiffrer la clé de chiffrement SK du fichier informatique F dans sa version chiffrée FCRYPT, il peut ensuite déchiffrer la version chiffrée FCRYPT pour retrouver le fichier informatique F d'origine. Selon une variante, les versions chiffrées de la clé de chiffrement symétrique SK ne sont pas stockées dans un en-tête du fichier comprenant une version cryptée FCRYPT du fichier informatique f, mais à la fin de ce fichier, ou encore dans un quelconque autre endroit du fichier, de façon organisée et de sorte que les versions chiffrées de la clé de chiffrement SK soient associées à la version chiffrée FCRYPT, par exemple dans un même conteneur de données.

Selon une autre variante de réalisation, les versions chiffrées de la clé symétrique de chiffrement SK ne sont pas associées chacune directement dans le fichier avec l'identifiant unique d'un client CIDi, mais l'organisation des versions chiffrées de la clé SK dans le fichier permet d'identifier le client CIDi à qui chacune des versions chiffrées de la clé de chiffrement SK est associée. Par exemple, les versions chiffrées de la clé de chiffrement SK dans un conteneur de données du fichier contenant la version FCRYPT du fichier informatique F se succèdent dans le même ordre que les identifiants des paires de clés ALPHAi ,BETAi dans l'enregistrement de la table FL de gestion des fichiers du magasin de clés 100, en lien avec le fichier informatique F.

Le magasin de clés 100 exécute donc un procédé de chiffrement et de stockage d'un fichier informatique F à stocker sous forme chiffrée en établissant (c'est-à-dire en créant ou actualisant) la liste KL de paires de clés privée ALPHAi et publique BETAi, liste dans laquelle chacune des paires de clés ALPHAi et BETAi est associée à un identifiant unique CIDi d'un i^{ème} client autorisé à accéder audit fichier informatique F, puis en recevant, le fichier informatique F et le chiffrant en une version chiffrée FCRYPT grâce à une clé symétrique de chiffrement SK du fichier informatique F, puis en chiffrant cette clé de chiffrement en autant de versions chiffrées qu'il n'existe de clients autorisés à accéder au fichier informatique F, chacune des versions chiffrées de la clé de chiffrement SK étant obtenue par un chiffrement à l'aide de la clé publique BETAi de chiffrement de la paire de clés ALPHAi, BETAi du client autorisé en accès, à qui elle est attribuée.

Ainsi, un client désireux de déchiffrer une version chiffrée FCRYPTi d'un fichier informatique Fi, déchiffre d'abord une version chiffrée de la clé de chiffrement symétrique SK au moyen de sa clé privée ALPHAi, puis, une fois la clé de chiffrement symétrique SK obtenue, le client peut déchiffrer la version chiffrée FCRYPTi d'un fichier Fi pour obtenir le fichier natif Fi. Selon un mode de réalisation de l'invention, la clé de chiffrement symétrique SK est différente pour chacun des fichiers Fi chiffré au moyen du magasin de clés 100. Avantageusement, une clé symétrique de chiffrement SK est générée de manière aléatoire.

Il est à noter que l'étape précitée de réception du fichier consiste à recevoir le fichier informatique F depuis le client et par l'intermédiaire de l'application client lorsque le fichier F est stocké sous une forme chiffrée pour la première fois, ou encore lors d'une mise à jour de ce fichier informatique F dans l'espace de stockage (stockage d'une nouvelle version du fichier), et que cette étape de réception du fichier informatique F consiste à lire depuis l'espace de stockage STM et déchiffrer une version chiffrée du fichier informatique F lorsqu'une mise à jour des droits d'un ou plusieurs clients est opérée dans le magasin de clés 100.

Ensuite une version chiffrée FCRYPT du fichier informatique F, chiffrée au moyen de ladite clé de chiffrement SK dudit fichier informatique F est enregistrée dans l'espace de stockage de fichiers informatiques STM, accessible depuis le magasin de clés 100, et géré sous contrôle de ce dernier, puis le magasin de clés 100 rend accessible à chacun des clients Ci autorisés à accéder au fichier informatique F une version chiffrée de la clé de chiffrement SK, qui est associée (liée) à la clé publique de chiffrement BETAi en enregistrant cette version chiffrée de la clé de chiffrement dans un en-tête ou une autre partie du fichier, en association avec un identifiant unique du client, en association avec la clé publique BETAi, ou encore en étant identifiable à partir de sa position dans le fichier. Enfin le magasin de clés 100 associe le fichier F, dans la liste FL de fichiers Fi chiffrés et stockés sous contrôle du magasin de clés 100, à un ou plusieurs identifiants uniques KIDi de paires de clés ALPHAi et BETAi, ainsi qu'à un pointeur FPTR vers une version chiffrée FCRYPT dudit fichier informatique F, enregistrée dans l'espace de stockage de fichiers et comprenant des versions chiffrées de sa clé symétrique de chiffrement SK, dans un en-tête ou une autre partie du fichier (de la version chiffrée FCRYPT).

Selon une variante du mode de réalisation, le magasin 100 est identifié lui aussi comme un client Ci autorisé à accéder à l'ensemble des fichiers informatiques Fi dont il gère le chiffrement et le stockage et possède sa propre paire de clés respectivement privée ALPHAM et publique BETAM. Ceci permet de pallier la perte d'une clé privée ALPHAi par l'un des clients Ci. La clé publique BETAM est alors systématiquement utilisée pour le chiffrement d'un fichier dans la mesure où elle fait partie de la liste des clés publiques de la liste de paires de clés associées à des clients autorisés en accès. Cette variante permet au magasin de clés 100 d'utiliser sa clé privée ALPHAM à chaque fois qu'il doit déchiffrer une version chiffrée d'un fichier informatique Fi. En effet, sa clé privé ALPHAM lui permet de déchiffrer la version chiffrée de la clé SK qui lui est associée dans l'entête de la version cryptée FCRYPT du fichier F. Cette solution est surtout pertinente dans le cas où le magasin de clés 100 ne conserve pas une copie des clés privées ALPHAi communiquées aux clients, et que les clients sont alors seuls « responsables » de la garde de leurs clés respectives.

Avantageusement, et du fait du procédé de chiffrement et de stockage décrit ci-avant, une paire de clés révoquée n'est pas utilisée pour le chiffrement et le déchiffrement d'un fichier informatique Fi (ou plus exactement de sa clé symétrique de chiffrement SK) selon le mode opératoire décrit, et un client associé à une paire de clés révoquée ne peut donc plus déchiffrer la version chiffrée d'un fichier informatique Fi, puisqu'il ne peut plus déchiffrer une version chiffrée de la clé de chiffrement SK. La révocation d'une paire de clés ALPHAi et BETAi comprend le fait d'actualiser son indicateur *status* KSTAi avec un identifiant indiquant la révocation, mais aussi le fait de retirer l'identifiant de la paire de clés révoquée de la liste des identifiants uniques de clés enregistrées comme ayant accès à tout fichier de la liste FL de fichiers gérés par le magasin de clés 100 qui comprend cet identifiant unique d'une paire de clés. Selon un mode de réalisation, un retrait (effacement) d'une paire de clés du magasin de clés constitue également une révocation de cette clé. Selon un mode de réalisation de l'invention, une paire de clés ALPHAi, BETAi ne peut être associée à un client que si le magasin 100 détecte que ce client est connecté de manière sécurisée au magasin 100, par l'intermédiaire d'une application client, et depuis le réseau local 1 de type LAN. C'est-à-dire soit via une connexion filaire, soit via une connexion sans-fil sécurisée (chiffrée). Ainsi, si l'application client est exécutée sur un dispositif qui n'est pas connecté au réseau local 1, mais connecté par exemple au réseau étendu 1000, le magasin de clés 100 détecte cette configuration de connexion non locale et retourne au client un message d'erreur indiquant qu'il n'est pas possible d'attribuer une paire de clés au client. L'opération de chiffrement et de stockage sollicitée depuis le client qui n'est pas connecté au réseau local 1 est alors interrompue.

Avantageusement, chacun des clients autorisés en accès par le magasin de clés 100 possède une clé privée ALPHAi non révoquée utilisable pour le déchiffrement de la version chiffrée FCRYPTi d'un fichier informatique Fi auquel il veut pouvoir accéder, via le déchiffrement de la clé symétrique de chiffrement SK du fichier. L'application client, ou une application tierce compatible, peut donc procéder elle-même au déchiffrement d'une version chiffrée du fichier informatique Fi ou encore obtenir une version déjà déchiffrée, car d'abord déchiffrée puis transmise par le magasin de clés 100.

Lorsqu'un client demande au magasin de clés 100 la suppression d'un fichier informatique Fi dont le chiffrement et le stockage sont réalisés sous le contrôle du magasin de clés 100, le magasin de clés 100 supprime la version chiffrée FCRYPTi du fichier informatique Fi de l'espace de stockage et supprime les informations relatives à ce fichier informatique Fi de la liste FL des fichiers informatiques dont le chiffrement et le stockage sont gérés par le magasin de clés 100. Selon un mode de réalisation de l'invention, seuls certains clients ou certains utilisateurs ont le droit de supprimer un fichier informatique Fi géré par le magasin de clés 100, par exemple seuls ceux bénéficiant des privilèges d'un administrateur du magasin de clés 100.

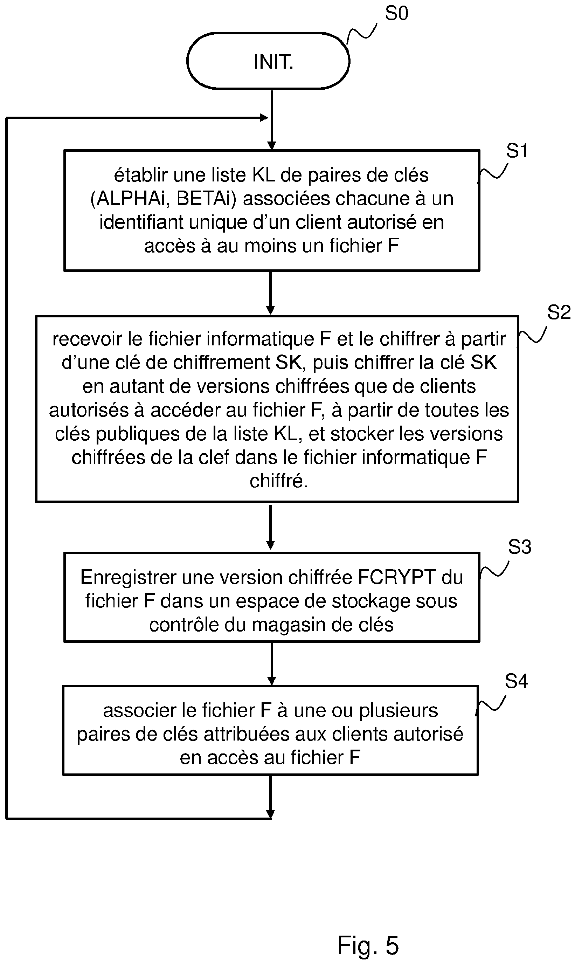

La Fig.5 est un ordinogramme représentant des étapes du procédé de chiffrement et de stockage à partir d'une liste de clés ALPHAi et BETAi attribuées à des clients identifiés comme étant autorisés à accéder aux services mis en oeuvre par le magasin de clés 100. Une étape S0 correspond à un état dans lequel les dispositifs électroniques connectés au réseau local 1 sont opérationnels et configurés pour interagir les uns avec les autres de façon nominale. En particulier, la passerelle réseau 10 est configurée de sorte à permettre aux dispositifs de type smartphone et de type laptop de se connecter au réseau local 1 de type LAN. En outre, la passerelle réseau 10 est configurée pour connecter le réseau local 1 au réseau étendu 1000, le magasin de clés 100 est configuré pour offrir des services de chiffrement et de stockage à des utilisateurs autorisés à y accéder et le dispositif de stockage de fichiers 17 comprenant l'espace de stockage STM est connecté à la passerelle réseau 10 et est normalement opérationnel. Par exemple, l'utilisateur 5, déclaré comme administrateur de l'ensemble du réseau local 1, et donc de la passerelle réseau 10 a créé des identifiants et des mots de passe pour lui-même et à chacun des autres utilisateurs, de sorte qu'ils puissent s'identifier et avoir accès à des services offerts et implémentés par la passerelle réseau 10, dont notamment le procédé de chiffrement et de stockage selon l'invention.

Selon l'exemple d'exécution du procédé qui suit, l'utilisateur 3 est identifié sur le dispositif électronique laptop 13 grâce à une application client configurée pour permettre le stockage et le chiffrement de fichiers informatiques dans l'espace de stockage STM du dispositif de stockage 17, par l'entremise du magasin de clés 100 de la passerelle réseau 10, lequel magasin de clés 100 permet avantageusement une gestion centralisée de stockage sécurisé. Selon cet exemple, l'utilisateur 3 s'apprête à stocker un fichier informatique F1 sous forme chiffrée, et sous contrôle du magasin de clés 100 de la passerelle 10. L'utilisateur 3 et le dispositif électronique laptop 13 forment en combinaison un client C2 selon l'exemple représenté sur la Fig.2. Le client C2 est identifié par le magasin de clés 100 grâce à un identifiant unique qui est, par exemple, un identifiant de l'utilisateur utilisé pour sa connexion à l'application client, et l'adresse MAC du dispositif qu'il utilise, à savoir le laptop 13. L'identifiant peut également être le mot de passe du client, ou un élément dérivé du mot de passe. Selon cet exemple, ce client C2 n'a encore jamais réalisé d'opération de connexion au magasin de clés 100 et n'a donc, de fait, pas réalisé de stockage d'un quelconque fichier informatique grâce aux services mis à sa disposition par le magasin de clés 100. Selon un mode de réalisation, lorsque le client C2 se connecte ainsi au magasin de clés 100, le magasin de clés 100 consulte sa liste de paires de clés et détermine que le client C2 n'est pas identifié parmi les clients déjà autorisés en accès à l'un au moins des fichiers disponibles dans l'espace de stockage du dispositif de stockage 17. Le magasin de clés 100 génère alors une paire de clés ALPHA 1 et BETA 1 respectivement privée et publique et l'attribue au client C2. L'attribution de cette paire de clés K1 est réalisée par l'enregistrement dans la liste KL de clients autorisés en accès aux services de chiffrement et de stockage, de la paire de clés K1 en association avec l'identifiant unique C2 ou une version chiffrée de cet identifiant. Cette opération d'enregistrement constitue un établissement, lors d'une étape S1 de la liste KL de paires de clés associées chacun à un identifiant unique d'un client autorisé en accès au magasin de clés et à au moins un fichier. On entend ici par établissement de la liste KL, la création de la liste KL ou encore une mise à jour de cette liste KL. Lors de son opération de stockage, l'utilisateur 3 désigne le fichier informatique F à stocker au moyen de l'application client avec laquelle il s'est identifié, en le sélectionnant par exemple et en indiquant qu'il souhaite un stockage de ce fichier. Cette sélection peut être réalisée simplement au moyen d'une opération de cliquer-glisser d'une représentation du fichier vers une représentation du dispositif de stockage 17 ou d'une représentation d'un espace de stockage dédié correspondant à un stockage sur le dispositif de stockage 17, par exemple à l'aide d'une interface utilisateur graphique. Dès lors, l'application client exécutée sur le laptop 13 transmet le fichier F1 au magasin de clés qui le reçoit lors d'une étape S2 et le chiffre en une version chiffrée FCRYPT1 en utilisant une clé symétrique de chiffrement SK et chiffre la clé de chiffrement SK en autant de versions chiffrées que de clients autorisés à accéder au fichier informatique F à partir de, respectivement, toutes les clés publiques BETAi des paires de clés associées aux clients identifiés comme étant autorisés à accéder au fichier F1, ou plus exactement à une version chiffrée FCRYPT1 du fichier F1, à stocker une version actualisée de ce fichier ou encore à l'effacer. Dans le cas, par exemple où l'utilisateur 3 opérant sur le laptop 13 est seul à détenir des droits d'accès au fichier F1, le fichier F1 est chiffré à l'aide de la clé de chiffrement SK et cette clé de chiffrement SK est à son tour chiffrée à l'aide de la clé publique BETA 1 de la paire de clés ALPHA 1, BETA1 et la version chiffrée de la clé de chiffrement SK est déchiffrable au moyen de la clé privée ALPHA1. La version chiffrée FCRYPT1 est ensuite enregistrée lors d'une étape S3 dans l'espace de stockage STM dédié du dispositif de stockage 17, sous contrôle du magasin de clés 100 utilisant, par exemple le protocole de transfert de fichiers SCP. La version chiffrée de la clé de chiffrement SK, chiffrée au moyen de la clé publique BETA1, est enregistrée dans un en-tête ou une autre partie du fichier sous forme chiffrée, dans l'espace de stockage STM, ce qui constitue une association entre la version chiffrée de la clé SK et la version chiffrée FCRYPT1 du fichier F1.

Enfin, lors d'une étape S4, le magasin de clés 100 associe le fichier F1, à la paire de clés du client C2, dans sa liste interne FL de fichiers dont il assure la gestion en termes de chiffrement et de stockage, si le client C2 est le seul à détenir des droits d'accès au fichier F1, ou encore à toutes les paires de clés associées à tous les clients autorisés en accès au fichier F1, si le client C2 n'est pas seul à détenir des droits d'accès au fichier F 1. L'association entre le fichier F1 et les paires de clés de clients autorisés en accès à ce fichier F1 est réalisée par l'écriture d'un identifiant unique de chacune des paires de clés dans un enregistrement référençant le fichier F1 dans la liste interne de fichiers FL. Avantageusement, et grâce au procédé décrit, l'ajout ou le retrait de droits d'accès à un fichier Fi existant, pour un client déterminé Ci, est réalisable simplement en établissant au besoin une version actualisée de la liste KL d'une paire de clés ALPHAi et BETAi, si le client Ci ne dispose pas encore d'une paire de clés ou si la paire de clés qui lui est attribuée doit être révoquée, et en déchiffrant et rechiffrant le fichier Fi concerné, puis en actualisant la liste FL des fichiers en associant le fichier Fi concerné aux paires de clés ALPHAi et BETAi des clients alors autorisés en accès au fichier Fi.

Dans le cas où une modification des droits d'accès à un fichier Fi est requise pour un client Ci, et que le client Ci a déjà une paire de clés qui lui est attribuée et que celle-ci n'est en outre pas à révoquer, la liste des paires de clés ALPHAi et BETAi des clients autorisés demeure inchangée et seule la table FL des fichiers gérés par le magasin de clés 100 est actualisée. Dans ce cas, la version chiffrée du fichier concerné est tout de même déchiffrée et rechiffrée avec une seconde clé publique déterminée à partir de toutes les clés publiques BETAi des clients autorisés en accès.

Ainsi, chaque fois que des droits sont ajoutés ou retirés en lien avec un fichier Fi, la version chiffrée du fichier Fi est déchiffrée et le fichier Fi est ensuite rechiffré en une nouvelle version chiffrée FCRYPTi.

La Fig. 6 illustre schématiquement un exemple d'architecture interne du dispositif de sécurisation d'accès, encore appelé magasin de clés 100. On note que la Fig. 6 pourrait aussi illustrer schématiquement un exemple d'architecture matérielle de la passerelle réseau 10.

Selon l'exemple d'architecture matérielle représenté à la Fig. 6, le magasin de clés 100 comprend alors, reliés par un bus de communication 110 : un processeur ou CPU (« Central Processing Unit » en anglais) 119 ; une mémoire vive RAM (« Random Access Memory » en anglais) 112 ; une mémoire morte ROM (« Read Only Memory » en anglais) 113 ; une unité de stockage telle qu'un disque dur (ou un lecteur de support de stockage, tel qu'un lecteur de cartes SD (« Secure Digital » en anglais) 114 ; au moins une interface de communication 115 permettant au magasin de clés 100 de communiquer avec des dispositifs présents dans le réseau de communication 1, tels que par exemple, les dispositifs électroniques 12, 13, 14, 15 et 16 ou le dispositif de stockage de fichiers 17 comprenant l'espace de stockage de fichiers STM, cette interface de communication opérant en combinaison avec le système antennaire 111.

Le processeur 119 est capable d'exécuter des instructions chargées dans la RAM 112 à partir de la ROM 113, d'une mémoire externe (non représentée), d'un support de stockage (tel qu'une carte SD), ou d'un réseau de communication. Lorsque le magasin de clés 100 est mis sous tension, le processeur 119 est capable de lire de la RAM 112 des instructions et de les exécuter. Ces instructions forment un programme d'ordinateur causant la mise en oeuvre, par le processeur 119, d'une partie d'un procédé décrit en relation avec la Fig. 5. Tout ou partie du procédé implémenté par le magasin de clés 110, ou ses variantes décrites peut être implémenté sous forme logicielle par exécution d'un ensemble d'instructions par une machine programmable, par exemple un DSP (« Digital Signal Processor » en anglais) ou un microcontrôleur, ou être implémenté sous forme matérielle par une machine ou un composant dédié, par exemple un FPGA (« Field-Programmable Gate Array » en anglais) ou un ASIC (« Application-Specific Integrated Circuit » en anglais). En général, le magasin de clés 100 comprend de la circuiterie électronique configurée pour mettre en oeuvre le procédé décrit en relation avec lui-même ainsi qu'avec les dispositifs électroniques 12, 13, 14, 15 16 et le dispositif de stockage de fichiers 17 ainsi que tout autre dispositif impliqué dans l'exécution du procédé de chiffrement et de stockage de fichiers décrit. Bien évidemment, le magasin de clés 100 comprend en outre tous les éléments usuellement présents dans un système comprenant une unité de contrôle et ses périphériques, tels que, un circuit d'alimentation, un circuit de supervision d'alimentation, un ou plusieurs circuits d'horloge, un circuit de remise à zéro, des ports d'entrées-sorties, des entrées d'interruptions, des drivers de bus. Cette liste étant non exhaustive.

L'invention ne se limite pas aux seuls modes de réalisation et exemples précédemment décrits. Par exemple, l'espace de stockage géré par le magasin de clés 100 peut être morcelé en plusieurs sous-espaces de stockage. Selon une autre variante, l'espace de stockage géré par le magasin de clés 100 peut être implémenté en dehors d'un réseau local, tel que par exemple sur un serveur distant situé dans le réseau étendu 1000 (solution dite de *« serveur Cloud* ») et accessible par l'intermédiaire d'une liaison sécurisée. Selon une autre variante, plusieurs espaces de stockages sont gérés par le magasin de clés 100 et sont de types différents (Cloud et NAS, par exemple).

## Revendications

1. Procédé de chiffrement et de stockage d'un fichier informatique (F), le procédé étant exécuté par un dispositif de sécurisation des accès (100), dit « magasin de clés » (100), audit fichier informatique (F), le magasin de clés (100) étant embarqué dans un équipement de type passerelle réseau domestique (10), le procédé comprenant :
- établir une liste (KL) de *n* paires de clés (ALPHAi, BETAi), chaque paire de clés (ALPHAi, BETAi) comprenant respectivement une clé dite privée (ALPHAi) et une clé dite publique (BETAi), dans laquelle chacune des paires de clés (ALPHAi, BETAi) est associée à un identifiant unique (CIDi) d'un i*^{ème}* client (Ci) autorisé à accéder audit fichier informatique (F),
- recevoir, ledit fichier informatique (F) et le chiffrer en une version chiffrée (FCRYPT) dudit fichier informatique (F), grâce à une clé de chiffrement (SK) dudit fichier informatique (F),
- chiffrer la clé de chiffrement (SK) en autant de versions chiffrées que de clés publiques (BETAi), chacune des versions chiffrées de la clé de chiffrement étant chiffrée avec l'une des clés publiques des paires de clés des clients autorisés à accéder au fichier F,
- enregistrer une version chiffrée (FCRYPT) dudit fichier informatique (F), chiffrée au moyen de ladite clé de chiffrement (SK) dudit fichier informatique (F), dans un espace de stockage de fichiers (STM) accessible depuis le magasin de clés (100), la version chiffrée (FCRYPT) du fichier informatique (F) étant associée avec les versions chiffrées de la clé de chiffrement (SK),
- associer le fichier (F), dans une liste (FL) de fichiers (Fi) chiffrés et stockés sous contrôle dudit magasin de clés (100), à un ou plusieurs identifiants uniques (KIDi) de paires de clés (ALPHAi, BETAi), ainsi qu'à un pointeur (FPTRi) vers une version chiffrée (FCRYPTi) dudit fichier informatique (Fi) enregistrée dans l'espace de stockage de fichiers (STM).

2. Procédé de chiffrement et de stockage d'un fichier informatique (F) selon la revendication 1, dans lequel :
- établir la liste (KL) de *n* paires de clés (ALPHAi, BETAi) comprend un ajout d'une n*^{ième}* paire de clés (ALPHAi, BETAi) associée à un identifiant unique (CIDn) d'un n*^{ième}* client autorisé à accéder au fichier informatique (F) dans la liste (KL) de paires de clés, et/ou dans lequel
- un identifiant d'une i*^{ième}* paire de clés est inséré dans la liste (FL) de fichiers chiffrés et stockés par ledit magasin de clés (100), en association avec ledit fichier informatique (F) aux fins d'octroyer à un i*^{ième}* client nouvellement autorisé à accéder au fichier informatique (F) un droit d'accès au fichier informatique (F).

3. Procédé de chiffrement et de stockage d'un fichier informatique (F) selon la revendication 1, dans lequel :
- établir la liste (KL) de *n* paires de clés (ALPHAi, BETAi) comprend un retrait d'une i*^{ième}* paire de clés (ALPHAi, BETAi) associée à un identifiant unique (CIDi) d'un i*^{ième}* client autorisé à accéder au fichier informatique (F) dans la liste (KL) de paires de clés, et/ou dans lequel,
- un identifiant d'une i*^{ième}* paire de clés, est retiré de la liste (FL) de fichiers chiffrés et stockés par ledit magasin de clés (100), en association avec ledit fichier informatique (F) aux fins d'interdire au i*^{ième}* client, précédemment autorisé, un accès au fichier informatique (F).

4. Procédé de chiffrement et de stockage d'un fichier informatique (F) selon l'une quelconque des revendications 1 à 3, dans lequel un identifiant unique (CIDi) d'un client comporte un nom d'utilisateur et/ou un mot de passe, ou un dérivé de ces éléments.

5. Procédé de chiffrement et de stockage d'un fichier informatique (F) selon la revendication 4, dans lequel un ou plusieurs identifiants uniques (CIDi) d'un client (Ci) comportent un identifiant unique d'un dispositif utilisé par un utilisateur du magasin de clés (100), notamment du type d'une adresse MAC d'un dispositif électronique.

6. Procédé de chiffrement et de stockage d'un fichier informatique (F) selon l'une quelconque des revendications précédentes, comprenant une étape d'authentification d'un client autorisé à accéder audit dispositif magasin de clés (100) vérifiant que ledit client est connecté audit dispositif magasin de clés (100) par l'intermédiaire d'un réseau local de type LAN, par le biais d'une liaison filaire ou d'une liaison sans fil chiffrée.

7. Dispositif de sécurisation d'accès (100), dit « magasin de clés », à au moins un fichier informatique (F), le magasin de clés (100) étant embarqué dans un équipement de type passerelle réseau domestique (10) et comprenant des circuiteries électroniques comprenant:
- un module d'établissement d'une liste (KL) de *n* paires de clés (ALPHAi, BETAi), chaque paire de clés (ALPHAi, BETAi) comprenant respectivement une clé dite privée (ALPHAi) et une clé dite publique (BETAi), dans laquelle chacune des paires de clés (ALPHAi, BETAi) est associée à un identifiant unique (CIDi) d'un i*^{ème}* client (Ci) autorisé à accéder audit fichier informatique (F),
- une interface de communication configurée pour la réception dudit fichier informatique (F) et un module de chiffrement dudit fichier informatique (F) en une version chiffrée (FCRYPT) dudit fichier informatique (F), grâce à une clé de chiffrement (SK) dudit fichier informatique (F), et pour le chiffrement de la clé de chiffrement (SK) en autant de versions chiffrées que de clés publiques (BETAi), chacune des versions chiffrées de la clé de chiffrement étant chiffrée avec l'une des clés publiques des paires de clés des clients autorisés à accéder au fichier F,
- un module d'enregistrement d'une version chiffrée (FCRYPT) dudit fichier informatique (F) au moyen de ladite clé de chiffrement (SK) dudit fichier informatique (F), dans un espace de stockage de fichiers (STM) accessible depuis le magasin de clés (100), la version chiffrée (FCRYPT) du fichier informatique (F) étant associée avec les versions chiffrées de la clé de chiffrement (SK),
- un module d'association du fichier (F), dans une liste (FL) de fichiers (Fi) chiffrés et stockés sous contrôle dudit magasin de clés (100), à un ou plusieurs identifiants uniques (KIDi) de paires de clés (ALPHAi, BETAi), ainsi qu'à un pointeur (FPTRi) vers une version chiffrée (FCRYPTi) dudit fichier informatique (Fi) enregistrée dans l'espace de stockage de fichiers (STM).

8. Produit programme d'ordinateur **caractérisé en ce qu'**il comprend des instructions de codes de programme pour exécuter les étapes du procédé selon l'une quelconque des revendications 1 à 6, lorsque ledit programme est exécuté par un processeur.

9. Support de stockage d'informations comprenant un produit programme d'ordinateur selon la revendication précédente.

## Patentansprüche

1. Verfahren zur Verschlüsselung und Speicherung einer Computerdatei (F), wobei das Verfahren durch eine Zugangssicherungsvorrichtung (100), "Schlüsselmagazin" (100) genannt, für die Computerdatei (F) ausgeführt wird, wobei das Schlüsselmagazin (100) in einer Einrichtung vom Typ Heimnetz-Gateway (10) eingebettet ist, wobei das Verfahren umfasst:
- Erstellen einer Liste (KL) von n Schlüsselpaaren (ALPHAi, BETAi), wobei jedes Schlüsselpaar (ALPHAi, BETAi) jeweils einen sogenannten privaten Schlüssel (ALPHAi) und einen sogenannten öffentlichen Schlüssel (BETAi) umfasst, wobei jedes der Schlüsselpaare (ALPHAi, BETAi) einer eindeutigen Kennung (CIDi) eins i-ten Clients (Ci) zugeordnet ist, der autorisiert ist, auf die Computerdatei (F) zuzugreifen,
- Empfangen der Computerdatei (F) und deren Verschlüsseln in eine verschlüsselte Version (FCRYPT) der Computerdatei (F) durch einen Verschlüsselungsschlüssel (SK) der Computerdatei (F),
- Verschlüsseln des Verschlüsselungsschlüssels (SK) in so viele verschlüsselte Versionen wie öffentliche Schlüssel (BETAi), wobei jede der verschlüsselten Versionen des Verschlüsselungsschlüssels mit einem der öffentlichen Schlüssel der Schlüsselpaare der Clients, die autorisiert sind, auf die Datei F zuzugreifen, verschlüsselt wird,
- Speichern einer verschlüsselten Version (FCRYPT) der Computerdatei (F), die mittels des Verschlüsselungsschlüssels (SK) der Computerdatei (F) verschlüsselt wurde, in einem Dateispeicherraum (STM), der vom Schlüsselmagazin (100) zugänglich ist, wobei die verschlüsselte Version (FCRYPT) der Computerdatei (F) den Versionen, die mit dem Verschlüsselungsschlüssel (SK) verschlüsselt sind, zugeordnet ist,
- Zuordnen der Datei (F) zu einer oder mehreren eindeutigen Kennungen (KIDi) von Schlüsselpaaren (ALPHAi, BETAi) in einer Liste von (FL) von Dateien (Fi), die unter der Kontrolle des Schlüsselmagazins (100) gespeichert sind, sowie zu einem Zeiger (FPTRi) auf eine verschlüsselte Version (FCRYPTi) der Computerdatei (Fi), die im Dateispeicherraum (STM) gespeichert ist.

2. Verfahren zur Verschlüsselung und Speicherung einer Computerdatei (F) nach Anspruch 1, wobei:
- Erstellen der Liste (KL) von *n* Schlüsselpaaren (ALPHAi, BETAi) eine Hinzufügung eines n-ten Schlüsselpaars (ALPHAi, BETAi) umfasst, das einer eindeutigen Kennung (CIDn) eines n-ten Clients zugeordnet ist, der autorisiert ist, auf die Computerdatei (F) auf der Liste (KL) von Schlüsselpaaren zuzugreifen, und/oder wobei
- eine Kennung eines i-ten Schlüsselpaars in Zuordnung zur Computerdatei (F) in die Liste (FL) von Dateien eingefügt wird, die vom Schlüsselmagazin (100) verschlüsselt und gespeichert werden, um einem i-ten Client, der neu autorisiert ist, auf die Computerdatei (F) zuzugreifen, ein Zugangsrecht zur Computerdatei (F) zu verleihen.

3. Verfahren zur Verschlüsselung und Speicherung einer Computerdatei (F) nach Anspruch 1, wobei:
- Erstellen der Liste (KL) von *n* Schlüsselpaaren (ALPHAi, BETAi) eine Rücknahme eines i-ten Schlüsselpaars (ALPHAi, BETAi) umfasst, das einer eindeutigen Kennung (CIDi) eines i-ten Clients zugeordnet ist, der autorisiert ist, auf die Computerdatei (F) auf der Liste (KL) von Schlüsselpaaren zuzugreifen, und/oder wobei
- eine Kennung eines i-ten Schlüsselpaars in Zuordnung zur Computerdatei (F) von der Liste (FL) von Dateien entfernt wird, die vom Schlüsselmagazin (100) verschlüsselt und gespeichert werden, um einem i-ten Client, der bisher autorisiert war, einen Zugriff auf die Computerdatei (F) zu verbieten.

4. Verfahren zur Verschlüsselung und Speicherung einer Computerdatei (F) nach einem der Ansprüche 1 bis 3, wobei eine eindeutige Kennung (CIDi) eines Clients einen Benutzernamen und/oder ein Passwort oder eine Ableitung aus diesen Elementen umfasst.

5. Verfahren zur Verschlüsselung und Speicherung einer Computerdatei (F) nach Anspruch 4, wobei eine oder mehrere eindeutige Kennungen (CIDi) eines Clients (Ci) eine eindeutige Kennung einer Vorrichtung umfassen, die von einem Benutzer des Schlüsselmagazins (100) verwendet wird, insbesondere vom Typ MAC-Adresse einer elektronischen Vorrichtung.

6. Verfahren zur Verschlüsselung und Speicherung einer Computerdatei (F) nach einem der vorhergehenden Ansprüche, das einen Schritt der Authentifizierung eines Clients, der autorisiert ist, auf die Schlüsselmagazinvorrichtung (100) zuzugreifen, umfasst und verifiziert, dass der Client über ein lokales Netz vom Typ LAN über eine verschlüsselte drahtgebundene oder drahtlose Verbindung mit dem Schlüsselmagazin (100) verbunden ist.

7. Zugangssicherungsvorrichtung (100), "Schlüsselmagazin" genannt, für mindestens eine Computerdatei (F), wobei das Schlüsselmagazin (100) in einer Einrichtung vom Typ Heimnetz-Gateway (10) eingebettet ist und elektronische Schaltungen umfasst, die umfassen:
- ein Modul zum Erstellen einer Liste (KL) von n Schlüsselpaaren (ALPHAi, BETAi), wobei jedes Schlüsselpaar (ALPHAi, BETAi) jeweils einen sogenannten privaten Schlüssel (ALPHAi) und einen sogenannten öffentlichen Schlüssel (BETAi) umfasst, wobei jedes Schlüsselpaar (ALPHAi, BETAi) einer eindeutigen Kennung (CIDi) eines i-ten Clients (Ci) zugeordnet ist, der autorisiert ist, auf die Computerdatei (F) zuzugreifen,
- eine Kommunikationsschnittstelle, die zum Empfangen der Computerdatei (F) konfiguriert ist, und ein Modul zur Verschlüsselung der Computerdatei (F) in eine verschlüsselte Version (FCRYPT) der Computerdatei (F) durch einen Verschlüsselungsschlüssel (SK) der Computerdatei (F) und zur Verschlüsselung des Verschlüsselungsschlüssels (SK) in so viele verschlüsselte Versionen wie öffentliche Schlüssel (BETAi), wobei jede der verschlüsselten Versionen des Verschlüsselungsschlüssels mit einem der öffentlichen Schlüssel der Schlüsselpaare der Clients, die autorisiert sind, auf die Datei F zuzugreifen, verschlüsselt wird,
- ein Modul zum Speichern einer verschlüsselten Version (FCRYPT) der Computerdatei (F) mittels des Verschlüsselungsschlüssels (SK) der Computerdatei (F) in einem Dateispeicherraum (STM), der vom Schlüsselmagazin (100) zugänglich ist, wobei die verschlüsselte Version (FCRYPT) der Computerdatei (F) den Versionen, die mit dem Verschlüsselungsschlüssel (SK) verschlüsselt sind, zugeordnet ist,
- ein Modul zum Zuordnen der Datei (F) zu einer oder mehreren eindeutigen Kennungen (KIDi) von Schlüsselpaaren (ALPHAi, BETAi) in einer Liste (FL) von Dateien (Fi), die unter der Kontrolle des Schlüsselmagazins (100) verschlüsselt und gespeichert werden, sowie zu einem Zeiger (FPTRi) auf eine verschlüsselte Version (FCRYPTi) der Computerdatei (Fi), die im Dateispeicherraum (STM) gespeichert ist.

8. Computerprogrammprodukt, das **dadurch gekennzeichnet ist, dass** es Programmcodeanweisungen zur Ausführung der Schritte des Verfahrens nach einem der Ansprüche 1 bis 6 umfasst, wenn das Programm durch einen Prozessor ausgeführt wird.

9. Informationsspeichermedium, das ein Computerprogrammprodukt nach dem vorhergehenden Anspruch umfasst.

## Claims

1. Method for encrypting and storing a computer file (F), the method being implemented by a device (100), known as a "key store" (100), for securing accesses to said computer file (F), the key store (100) being embedded in equipment of the home network gateway (10) type, the method comprising:
- establishing a list (KL) of *n* pairs of keys (ALPHAi, BETAi), each pair of keys (ALPHAi, BETAi) comprising respectively a so-called private key (ALPHAi) and a so-called public key (BETAi), wherein each of the pairs of keys (ALPHAi, BETAi) is associated with a unique identifier (CIDi) of an i^{th} client (Ci) authorised to access said computer file (F),
- receiving said computer file (F) and encrypting it as an encrypted version (FCRYPT) of said computer file (F), by means of a key (SK) for encrypting said computer file (F),
- encrypting the encryption key (SK) in as many encrypted versions as there are public keys (BETAi), each of the encrypted versions of the encryption key being encrypted with one of the public keys in the pairs of keys of the clients authorised to access the file F,
- recording an encrypted version (FCRYPT) of said computer file (F), encrypted by means of said key (SK) for encrypting said computer file (F), in a file storage space (STM) accessible from the key store (100), the encrypted version (FCRYPT) of the computer file (F) being associated with the encrypted versions of the encryption key (SK),
- associating the file (F), in a list (FL) of files (Fi) encrypted and stored under the control of said key store (100), with one or more unique identifiers (KIDi) of pairs of keys (ALPHAi, BETAi), as well as with a pointer (FPTRi) to an encrypted version (FCRYPTi) of said computer file (Fi) recorded in the file storage space (STM).

2. Method for encrypting and storing a computer file (F) according to claim 1, wherein:
- establishing the list (KL) of *n* pairs of keys (ALPHAi, BETAi) comprises an addition of an n^{th} pair of keys (ALPHAi, BETAi) associated with a unique identifier (CIDn) of an n^{th} client authorised to access the computer file (F) in the list (KL) of pairs of keys, and/or wherein
- an identifier of an i^{th} pair of keys is inserted in the list (FL) of encrypted files and stored by said key store (100), in association with said computer file (F) for purposes of granting to an i^{th} client newly authorised to access the computer file (F) a right of access to the computer file (F).

3. Method for encrypting and storing a computer file (F) according to claim 1, wherein:
- establishing the list (KL) of *n* pairs of keys (ALPHAi, BETAi) comprises a removal of an i^{th} pair of keys (ALPHAi, BETAi) associated with a unique identifier (CIDi) of an i^{th} client authorised to access the computer file (F) in the list (KL) of pairs of keys, and/or wherein
- an identifier of an i^{th} pair of keys is removed from the list (FL) of files encrypted and stored by said key store (100), in association with said computer file (F) for the purpose of preventing the i^{th} client, previously authorised, having access to the computer file (F).

4. Method for encrypting and storing a computer file (F) according to any one of claims 1 to 3, wherein a unique identifier (CIDi) of a client comprises a user name and/or a password and/or a derivative of these elements.

5. Method for encrypting and storing a computer file (F) according to claim 4, wherein one or more unique identifiers (CIDi) of a client (Ci) comprise a unique identifier of a device used by a user of the key store (100), in particular of the type consisting of an MAC address of an electronic device.

6. Method for encrypting and storing a computer file (F) according to any one of the preceding claims, comprising a step of authenticating a client authorised to access said key store (100) verifying that said client is connected to said key store device (100) by means of a local area network of the LAN type, by means of a cable connection or an encrypted wireless connection.

7. Device (100), known as a "key store", for securing access to at least one computer file (F), the key store (100) being embedded in equipment of the home network gateway (10) type and comprising electronic circuits comprising:
- a module for establishing a list (KL) of *n* pairs of keys (ALPHAi, BETAi), each pair of keys (ALPHAi, BETAi) comprising respectively a so-called private key (ALPHAi) and a so-called public key (BETAi), wherein each of the pairs of keys (ALPHAi, BETAi) is associated with a unique identifier (CIDi) of an i^{th} client (Ci) authorised to access said computer file (F),
- a communication interface configured for receiving said computer file (F) and a module for encrypting said computer file (F) as an encrypted version (FCRYPT) of said computer file (F), by means of a key (SK) for encrypting said computer file (F), and for encrypting the encryption key (SK) in as many encrypted versions as there are public keys (BETAi), each of the encrypted versions of the encryption key being encrypted with one of the public keys of the pairs of keys of the clients authorised to access the file F,
- a module for recording an encrypted version (FCRYPT) of said computer file (F) by means of said key (SK) for encrypting said computer file (F), in a file storage space (STM) accessible from the key store (100), the encrypted version (FCRYPT) of the computer file (F) being associated with the encrypted versions of the encryption key (SK),
- a module for associating the file (F), in a list (FL) of files (Fi) encrypted and stored under the control of said key store (100), with one or more unique identifiers (KIDi) of pairs of keys (ALPHAi, BETAi), as well as with a pointer (FPTRi) to an encrypted version (FCRYPTi) of said computer file (Fi) recorded in the file storage space (STM).

8. Computer program product, **characterised in that** it comprises program code instructions for executing the steps of the method according to any one of claims 1 to 6, when said program is executed by a processor.

9. Information storage medium comprising a computer program product according to the preceding claim.
